Europäisches Patentamt

European Patent Office

Office européen des brevets

(19)

(11) Numéro de publication : **0 296 058 B1**

(12)

# FASCICULE DE BREVET EUROPEEN

(45) Date de publication du fascicule du brevet :
09.10.91 Bulletin 91/41

(51) Int. Cl.$^5$ : **F02C 6/08**, F04D 27/02,
F04D 29/54, F23R 3/60

(21) Numéro de dépôt : **88401473.9**

(22) Date de dépôt : **15.06.88**

(54) **Carter de chambre de combustion de turboréacteur comportant des orifices de prélèvement d'air.**

(30) Priorité : 18.06.87 FR 8708503

(43) Date de publication de la demande :
21.12.88 Bulletin 88/51

(45) Mention de la délivrance du brevet :
09.10.91 Bulletin 91/41

(84) Etats contractants désignés :
DE FR GB

(56) Documents cités :
DE-A- 2 300 390
FR-A- 2 239 591
GB-A- 700 688
GB-A- 1 075 958
US-A- 2 986 231
US-A- 3 978 664

(73) Titulaire : **SOCIETE NATIONALE D'ETUDE ET DE CONSTRUCTION DE MOTEURS D'AVIATION, "S.N.E.C.M.A."**
**2, Boulevard du Général Martial Valin**
**F-75015 Paris (FR)**

(72) Inventeur : **Daguet, Alain Paul Moise**
**24, rue Pasteur Bondoufle**
**F-91000 Evry (FR)**
Inventeur : **Glowacki, Pierre Antoine**
**21, rue des Passe-Loups**
**F-77770 Fontaine le Port (FR)**
Inventeur : **Lassignardie, Hervé**
**Route de Melun Fontenailles la Geriane**
**F-77370 Nangis (FR)**

(74) Mandataire : **Moinat, François et al**
**S.N.E.C.M.A. Service des Brevets Boîte Postale 81**
**F-91003 Evry Cédex (FR)**

## Description

La présente invention concerne les structures de carters des chambres de combustion de turbomachines et plus particulièrement celles utilisées dans les turboréacteurs d'aviation ou les turboréacteurs à turbines libres et doublet d'hélices contrarotatives appelés "propfans".

Dans les turboréacteurs actuellement utilisés, des prélèvements d'air sont parfois réalisés au niveau de la chambre de combustion pour alimenter des circuits d'air de l'avion, notamment par exemple pour apporter dans certaines configurations de vol un complément d'air de pressurisation de l'avion lorsque l'air prélevé plus en amont sur le turboréacteur notamment au niveau du compresseur haute pression ne suffit pas à assurer seul cette pressurisation. C'est le cas par exemple en phase de descente à haute altitude.

Pour réaliser ces prélèvements d'air et éviter que l'air ainsi prélevé soit mélangé au carburant en suspension le prélèvement est réalisé dans les moteurs actuels par des tubes de prélèvement qui reçoivent l'air d'une chambre intermédiaire entre le compresseur haute pression et le fond de chambre de combustion proprement.

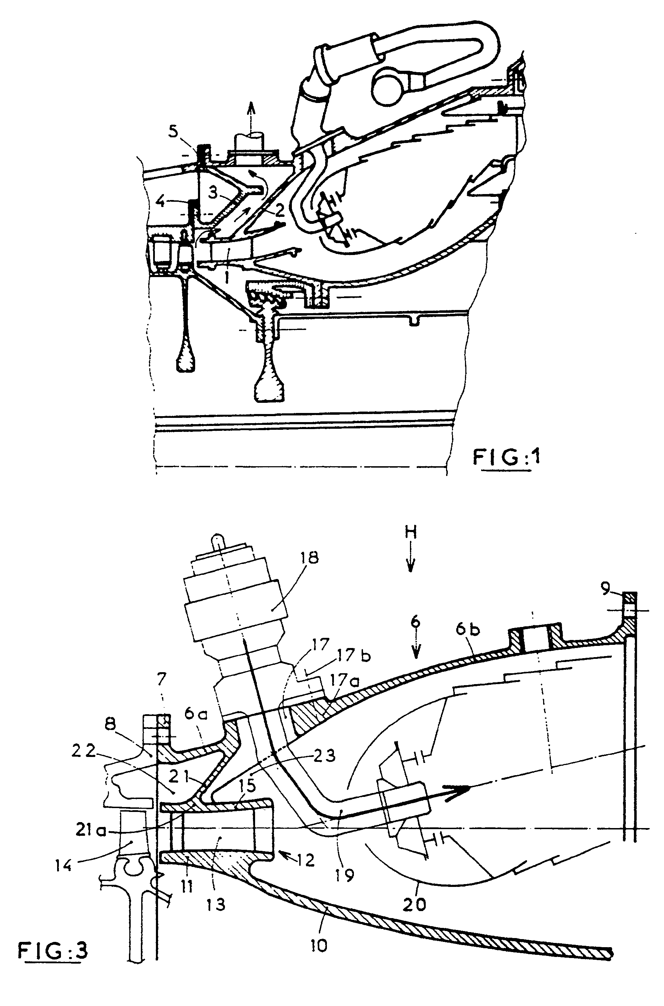

Un mode de réalisation selon cet état de la technique est représenté à la figure 1. Selon cet art antérieur, le cheminement d'air de prélèvement se réalise en amont du diffuseur 1 entre la virole 2 tronconique simplement annulaire du fond de chambre de combustion et une virole intermédiaire amont 3 qui relie une bride 4 du carter du compresseur haute pression et la bride de fixation 5 du carter externe de la chambre de combustion sur le carter externe amont.

Cette disposition présente l'inconvénient important de nécessiter le recul vers l'aval de la disposition des injecteurs de carburant qui doivent bien sûr être disposés en aval de la virole tronconique de fond de carter de chambre, ce qui impose de leur donner une forme coudée complexe (gênante au montage) afin que l'injection du carburant soit néanmoins réalisée à l'endroit prévu de la chambre de combustion.

Les réductions d'encombrements que l'on veut réaliser sur les moteurs futurs rendent souhaitables la diminution, voire la disparition de la zone intermédiaire destinée au prélèvement d'air, en amont de la virole de fond de carter de la chambre de combustion, de façon à réduire l'encombrement longitudinal des moteurs.

D'autre part on désire également simplifier la forme des tubes d'injection afin d'en améliorer le fonctionnement, d'en diminuer les risques de cokéfaction et d'en rendre le montage ou le remplacement plus aisé, donc plus rapide et moins coûteux

C'est le but de la présente invention que de prévoir une structure de carter qui permette ces résultats et qui tout en réalisant simultanément les impératifs parfois contradictoires précités soit néanmoins d'une fabrication aussi simple, voire plus simple au stade de la fonderie.

L'invention a donc pour objet général un carter de chambre de combustion annulaire de turbomachine comportant un diffuseur formé d'aubages compris entre une paroi annulaire externe et une paroi annulaire interne pour le guidage de l'air de combustion issu d'un compresseur vers la chambre de combustion et comprenant en outre sur sa paroi externe de carter des orifices de prélèvement d'air et des orifices de logement d'injecteurs de carburant, disposés en quinconce en couronne sur la paroi externe du carter. Selon l'invention, lesdits orifices de prélèvement et lesdits orifices d'injecteurs sont séparés les uns des autres par une cloison constituée par une virole de raccordement, ondulée à profil de section variable ayant son extrémité amont solidaire de la paroi externe du diffuseur et son extrémité aval passant alternativement en aval des orifices de prélèvement d'air et en amont des orifices de logement des injecteurs.

En outre, la cloison isole l'une de l'autre une première cavité allant de l'amont du diffuseur vers les orifices de prélèvement d'air dans lesquels elle débouche et alternée avec la première une seconde cavité allant des orifices de logement des injecteurs vers l'aval du diffuseur.

Des modes de réalisation seront précisés en regard des planches annexées parmi lesquelles :

— la figure 1 donne un exemple de l'état de la technique actuel auquel il a été fait référence plus haut, en demi-coupe longitudinale dans le plan d'un tube de prélèvement et d'un tube d'injection de carburant ;

— la figure 2 est une vue partielle de dessus du carter externe de chambre de combustion selon l'invention, en vue selon H de la figure 3 ;

— la figure 3 est une demi-couque longitudinale axiale selon III-III de la figure 2, c'est à dire dans le plan d'un injecteur, celui-ci étant représenté en traits fins ;

— la figure 4 est une demi-coupe longitudinale axiale de la partie externe du carter selon IV-IV de la figure 2, c'est à dire dans le plan d'un orifice de prélèvement ;

— la figure 5 est une vue en perspective partielle éclatée de la partie amont du carter de chambre de combustion selon l'invention, avec ses injecteurs, mais sans la chambre de combustion elle-même ;

— les figures 6a à 6g montrent les sections dans les plans A à G de la figure 4 ;

— les figures 7 et 8 montrent un second mode de réalisation du carter selon l'invention, la figure 7 étant une section dans le plan d'un orifice d'injecteur tandis que la figure 8 est une section dans le plan d'un orifice de prélèvement.

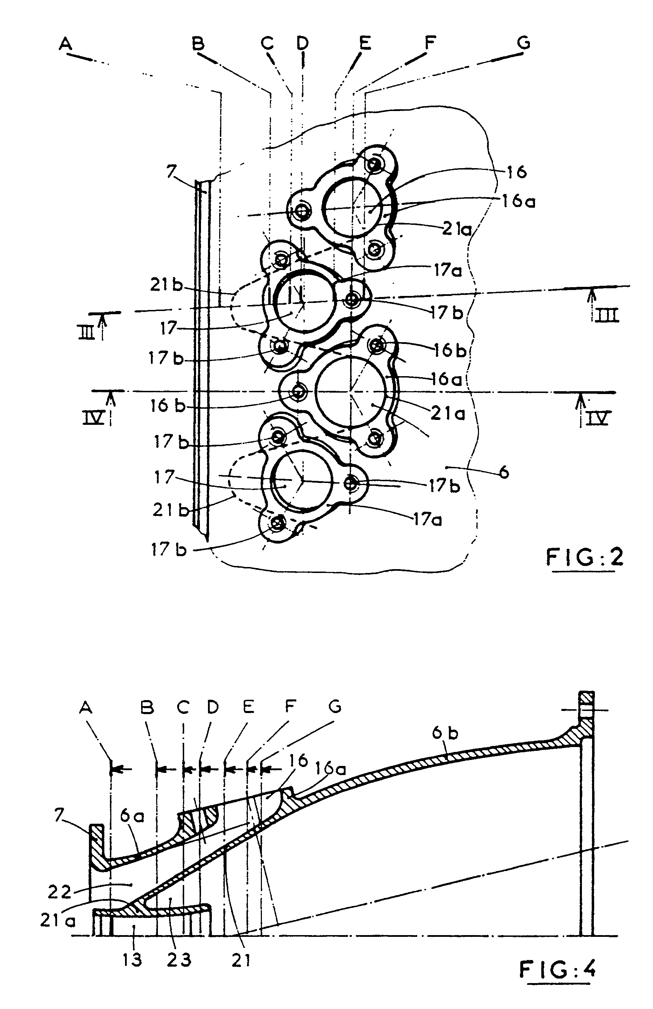

La figure 1 ayant été évoquée rapidement plus haut, si l'on se réfère maintenant aux figures 2 à 6 le carter de chambre de combustion comporte une paroi externe 6 dont la partie amont 6a se fixe par une bride annulaire radiale 7 sur le carter 8 du compresseur haute pression tandis que la partie aval 6b de la paroi externe 6 se fixe par une bride 9 sur le carter de turbine non représenté. Le carter comporte également une paroi interne 10 solidaire à l'amont de la paroi annulaire interne 11 d'un diffuseur 12 dont les aubages 13 servent au guidage de l'air de combustion issu du compresseur dont le dernier étage de rotor 14 a été représenté. Les aubages 13 sont solidaires également de la paroi annulaire externe 15 du diffuseur.

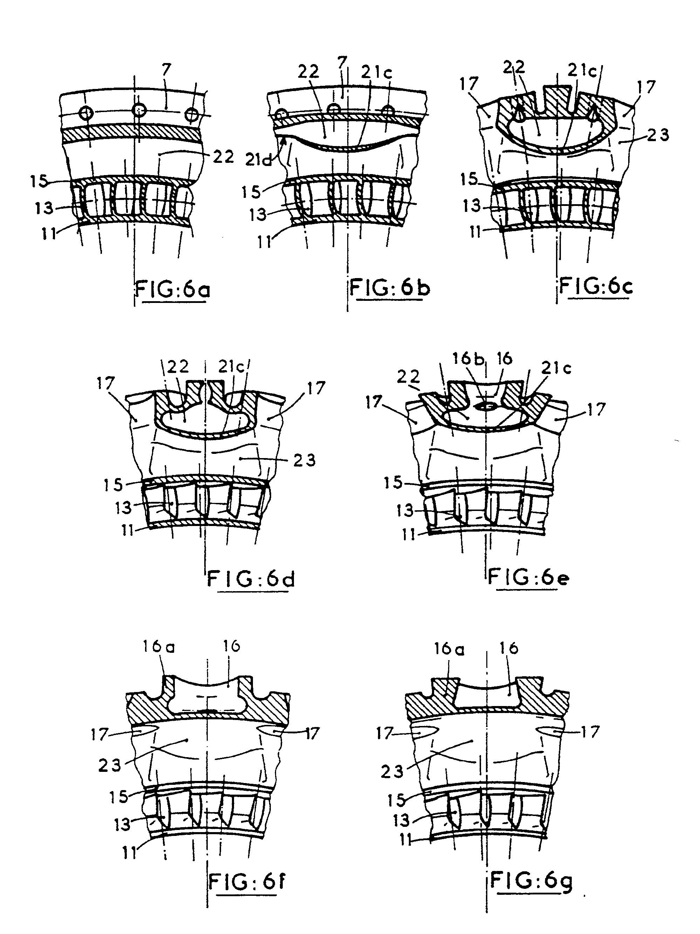

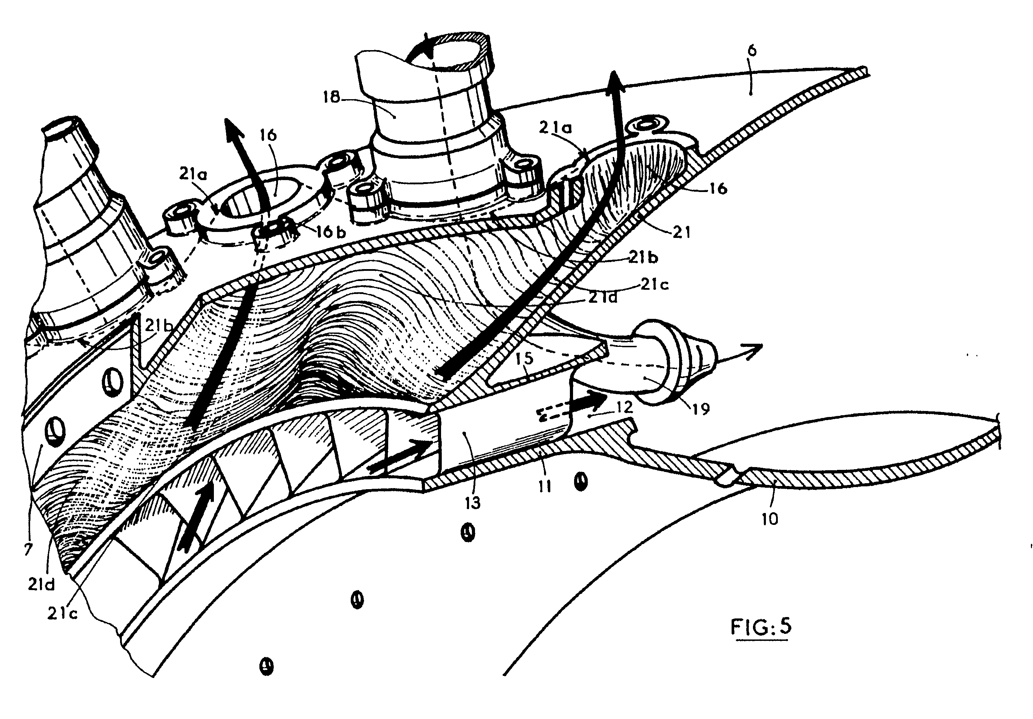

Comme on le voit plus particulièrement sur les figures 2 et 5, la paroi externe 6 du carter est percée d'orifices 16 et 17 destinés respectivement à supporter des tubes de prélèvement d'air (non représentés) et des injecteurs de carburant 18 dont les tubes d'injection 19 pénètrent dans le carter puis dans la chambre de combustion 20 où le carburant qu'ils apportent est mélangé à l'air comprimé issu du diffuseur 12.

Les orifices 16 de prélèvement et 17 d'injecteurs sont disposés en couronne sur la paroi externe 6 du carter et peuvent être disposés sur un même cercle si leur écartement est suffisant. Si comme à la figure 2 on désire que leur nombre soit important leur écartement ne permettra pas de les disposer exactement sur un même cercle auquel cas ils seront disposés sur deux cercles très voisins. Dans les deux cas précités, les orifices 16 et 17 sont alternés, c'est à dire que chaque orifice d'injection 17 est séparé de l'orifice d'injection suivant par un orifice de prélèvement, les bossages respectifs 16a, 17a de fixation des tubes de prélèvement et des injecteurs ayant eux même leurs axes de vis de fixation 16b, 17b disposés en triangles opposés.

Pour former un cheminement d'air vers les orifices de prélèvement 16, une cloison 21 isole des premières cavités 22 allant de l'amont du diffuseur vers les orifices 16 de prélèvement, et alternées avec les premières cavités, les secondes cavités 23 allant des orifices 17 de logement des injecteurs vers l'aval du diffuseur 12.

Dans le mode de réalisation des figures 2 à 6, la cloison 21 est constituée par une virole de raccordement ondulée à profil de section variable ayant son extrémité amont solidaire de la paroi annulaire externe 15 du diffuseur 12, ici environ au tiers de sa longueur tandis que l'extrémité aval de la cloison 21 se raccorde au carter externe 6 alternativement en aval des orifices de prélèvement 16, sur la partie aval 6a du carter dans le plan de la section droite desdits orifices de prélèvement avec une courbure de raccordement 21a concave vers l'amont, et en amont des orifices 17 de logement des injecteurs, dans le plan de la section droite desdits orifices d'injecteurs, avec alors une courbure de raccordement 21b concave vers l'aval à cet endroit. Cette courbure de raccordement alternée 21a, 21b a été représentée en pointillés sur les figures 2 et 5.

Vue de l'amont à la figure 5, cette cloison 21 de séparation des cheminements de fluides a une forme sensiblement tronconique 21c dans les plans de section des orifices de prélèvement 16 et comporte des "bosses" 21d au droit des plans des injecteurs dans les plans où la cloison 21 se raccorde en 21b au carter externe en amont des orifices 17.

Les figures 5 et 6a à 6g montrent les évolutions de cette courbure doublement alternée dans l'espace.

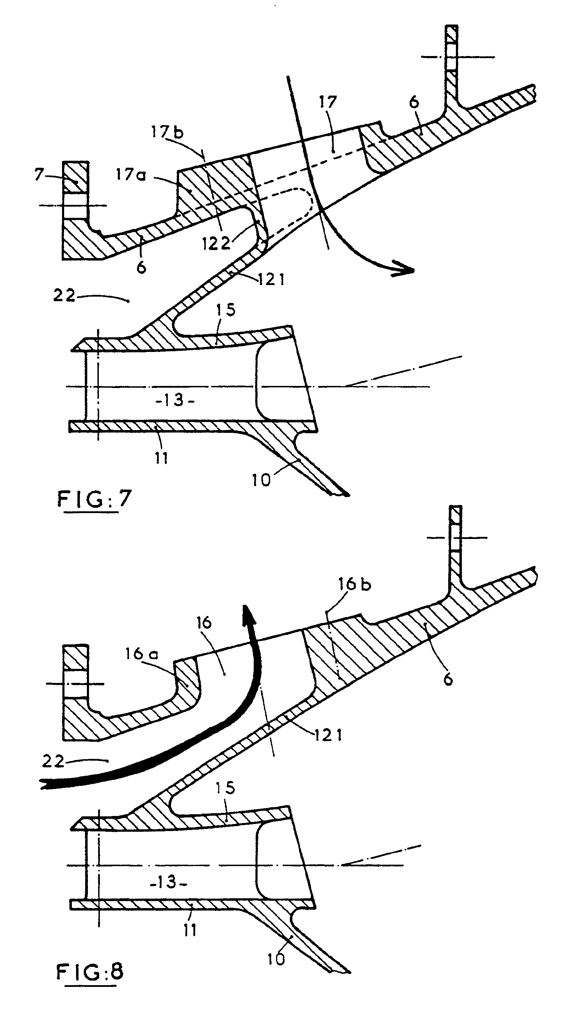

Dans la variante représentée aux figures 7 et 8 pour lesquelles les mêmes éléments ont reçu les mêmes chiffres de référence, la cloison 121 qui sépare les deux cheminements de fluides (air de prélèvement et carburant à injecter) a une forme simplifiée par rapport à la précédente en ce sens que sur tout le pourtour du carter, cette cloison 121 est une virole tronconique à profil de section constant reliant la paroi externe 15 du diffuseur et la paroi externe 6 du carter tandis que ladite cloison 121 possédant des parties 122 de cloison radiale au droit des bossages d'injecteurs et en amont de ceux-ci, ces parties 122 de la cloison radiale formant partie intégrante des bords amont de chaque orifice 17 d'injecteur.

Dans les deux modes de réalisation présentés ci-dessus, l'invention a pour intérêt principal de séparer de façon nette la zone de prélèvement d'air, celui-ci s'effectuant avec de l'air pris dans la veine en amont du diffuseur et la zone de positionnement des injecteurs de façon à ce que l'air prélevé par les orifices 16, ne subisse jamais le risque d'être pollué par du carburant.

En outre cette disposition supprime toute source de prélèvement d'air sur le carter externe de la chambre ce qui améliore grandement la tenue des films pariétaux de refroidissement destinés à éviter les surchauffes de la chambre de combustion.

Enfin, cette disposition permet de raccourcir les chambres de combustion sans compliquer la forme des tubes d'injecteurs.

## Revendications

1. Carter de chambre de combustion annulaire de turbomachine comportant un diffuseur (12) formé d'aubages (13) compris entre une paroi annulaire externe (15) et une paroi annulaire interne (11) pour le guidage de l'air de combustion issu d'un compresseur vers la chambre de combustion et comprenant en outre sur sa paroi externe de carter des orifices de prélèvement d'air (16) et des orifices (17) de logement d'injecteurs de carburant disposés en quinconce en couronne sur la paroi externe du carter, caractérisé en ce que lesdits orifices de prélèvement (16) et lesdits orifices d'injecteurs (17) sont séparés les uns des autres par une cloison (21, 121) constituée par une virole de raccordement, ondulée à profil de section variable ayant son extrémité amont solidaire de la paroi externe (15) du diffuseur (12) et son extrémité aval passant alternativement en aval (21a) des orifices (16) de prélèvement d'air et en amont (21b) des orifices (17) de logement des injecteurs.

2. Carter de chambre de combustion selon la revendication 1, caractérisé en ce que la cloison (21, 121) isole l'une de l'autre une première cavité annulaire (22) allant de l'amont du diffuseur (12) vers les orifices (16) de prélèvement d'air dans lesquelles elle débouche et alternée avec la première, une seconde cavité (23) allant des orifices (17) de logement des injecteurs (19) vers l'aval du diffuseur (12).

3. Carter de chambre de combustion selon la revendication 2, caractérisé en ce que la cloison (121) séparant la première et la seconde cavités (22, 23) est une virole tronconique à profil de section constant reliant la paroi externe (15) du diffuseur (12) et la paroi externe (6) du carter et comprend des parties de cloison radiales (122) reliant la cloison à profil constant (121) et la paroi de carter externe (6), lesdites parties de cloison radiales formant les bords amonts de chaque orifice (17) d'injecteur.

**Patentansprüche**

1. Gehäuse einer ringförmigen Strahltriebwerk-Brennkammer mit einem von einer Schaufelanordnung (13) gebildeten, zwischen einer ringförmigen Außenwand (15) und einer ringförmigen Innenwand (11) angeordneten Diffusor (12), der dazu dient, von einem Verdichter abgegebene Verbrennungsluft zu der Brennkammer zu leiten, sowie mit auf der Außenwand (15) vorgesehenen Öffnungen (16) zur Luftentnahme und Öffnungen (17) für die Aufnahme von Kraftstoffeinspritzdüsen, wobei diese Öffnungen gegeneinander versetzt kranzförmig auf der Außenwand des Gehäuses angeordnet sind, **dadurch gekennzeichnet,** daß die Öffnungen (16) zur Luftentnahme und die Öffnungen (17) für die Einspritzdüsen durch eine aus einem wellenförmig ausgebildeten Verbindungsreifen mit variablem Querschnittsprofil bestehende Trennwand (21, 121) voneinander getrennt sind, deren stromaufwärtiger Endbereich mit der Außenwand (15) des Diffusors (12) fest verbunden ist und deren stromabwärtiger Endbereich abwechselnd auf der stromabwärtigen Seite (21a) der Öffnungen (16) zur Luftentnahme und der stromaufwärtigen Seite (21b) der Öffnungen (17) zur Aufnahme der Einspritzdüsen verläuft.

2. Brennkammergehäuse nach Anspruch 1, dadurch gekennzeichnet, daß die Trennwand (21, 121) einen ersten ringförmigen Hohlraum (22) von einem zweiten Hohlraum (23) trennt, wobei der erste Hohlraum (22) von der stromaufwärtigen Seite des Diffusors (12) in Richtung zu den Öffnungen (16) zur Luftentnahme verläuft, in denen er mündet, und der zweite Hohlraum (23) im Wechsel mit dem ersten Hohlraum, von den Öffnungen (17) zur Aufnahme der Einspritzdüsen (19) zu der stromabwärtigen Seite des Diffusors (12) verläuft.

3. Brennkammergehäuse nach Anspruch 2, dadurch gekennzeichnet, daß die Trennwand (121), die den ersten und den zweiten Hohlraum (22, 23) voneinander trennt, ein kegelstumpfförmiger Ring mit konstantem Querschnittsprofil ist, der die Außenwand (15) des Diffusors (12) und die Außenwand (6) des Gehäuses verbindet und radiale Trennwandteile (122) aufweist, die die Trennwand (121) mit konstantem Profil und die Außenwand (6) des Gehäuses verbindet, wobei die radialen Trennwandteile die stromaufwärtigen Ränder der einzelnen Öffnungen (17) zur Aufnahme der Einspritzdüsen bilden.

**Claims**

1. Annular combustion chamber casing for a turboshaft engine comprising a diffuser (12) formed by vanes (13) placed between an outer annular wall (15) and an inner annular wall (11) for directing the combustion air emerging from a compressor into the combustion chamber and comprising in addition on the outer wall of its casing orifices for drawing off air (16) and orifices (17) for accommodating fuel injectors arranged in a zig zag pattern in a circle around the outer wall of the casing, characterised in that the said air draw-off orifices (16) and the said injector orifices (17) are separated from each other by a partition (21, 121) constituted by a corrugated connecting shell with a profile of varying cross section having its upstream end forming an integral part of the outer wall (15) of the diffuser (12) and its downstream end passing alternately downstream (21a) of the air draw-off orifices (16) and upstream (21b) of the injector orifices (17).

2. Combustion chamber in accordance with Claim 1, characterised in that the partition (21, 121) isolates from one another a first annular cavity (22) extending from upstream of the diffuser (12) towards the air draw-off orifices (16) into which it opens and alternating with the first, a second cavity (23) extending from the orifices (17) accommodating the injectors (19) towards downstream of the diffuser (12).

3. Combustion chamber in accordance with Claim 2, characterised in that the partition (121) separating the first and second cavities (22, 23) is a truncated conical shell with a profile of constant cross section connecting the outer wall (15) of the diffuser (12) and the outer wall (6) of the casing and comprises radial partitioning parts (122) connecting the constant cross section partition (121) to the outer wall (6) of the casing, the said radial partitioning parts forming the upstream rim of each injector orifice (17).

EP 0 296 058 B1

FIG:1

FIG:3

A  B  C  D  E  F  G

7

16
16a
21a
17a
21b
17b
17
17b
16b
16a
16b
21a
17b
17
17b
17a
21b
17b

III

IV

**FIG:2**

A  B  C  D  E  F  G

16
16a
6b
6a
7
22
21a
13  23  21

**FIG:4**

FIG:6a

FIG:6b

FIG:6c

FIG:6d

FIG:6e

FIG:6f

FIG:6g

FIG:5

FIG:7

FIG:8